# EUROPEAN PATENT APPLICATION

(11) **EP 4 458 557 A1**
(43) Date of publication of application: **06.11.2024**
(21) Application number: 23171334.8
(22) Date of filing: 03.05.2023
(51) Int. Cl.: B29C 65/04, B29C 65/00, B29L 31/00

(54) **WELDING DEVICE OF BLOOD BAGS CONNECTING TUBES**

(71) Applicant: Delcon S.r.l., 24050 Grassobbio (BG) (IT)
(72) Inventor: BRESCIANI, Mauro, 24052 Azzano San Paolo (BG) (IT); BONZI, Filippo, 24068 Seriate (BG) (IT); GIUDICI, Renato Guglielmo, 24023 Clusone (BG) (IT); ROSSETTI, Luca, 24020 Gorle (BG) (IT)
(74) Representative: Dragotti & Associati S.R.L.

(57) **Abstract**

A welding device (1) for blood bag connection tubes comprises a pair of electrodes (10, 12) defining between them a space for housing a blood bag connection tube (2) and designed to perform welding of a blood bag connection tube (2), an electric power supply source (20), a radiofrequency energy generation module (50) connected to the electric power supply source (20) and to a first electrode (12) of said pair of electrodes, and an actuator (70). The device further comprises a sliding shaft (30) connected to said first electrode (12) and a driving arm (32) having a first end connected to the actuator (70), and a sensor assembly which connects the sliding shaft (30) to the driving arm (32) and which is able to measure a pressing force exerted by said first electrode (12) on a blood bag connection tube (2) arranged between said pair of electrodes (10, 12).

## Description

The present invention relates to the sector of devices for treating medical containers containing blood components, and in particular to a welding device for blood bag connection tubes.

During the process for collecting donation blood or plasma, kits composed of several elements such as a needle, medical containers or a collection bag or end bags for the blood component separation process, and connection tubes or cannulas which interconnect these elements, are used.

At the end of the collection, before and during the successive steps for processing the donated blood or plasma, it is required to seal the connection tubes, or cannulas, of the bags used for collection, separate parts which are no longer useful or are dangerous (for example the needle) and/or create tube segments to be sent to the laboratories for analysis of the fluid contained inside them.

The sealing of the tubes usually is performed by means of a welding procedure which is in turn composed of various steps. During a first step the walls of the tube are compressed so as to constrict the passage inside the walls of the tube and move the blood away from the welding application point. During a second step, the actual welding is performed by melting together the two walls by means of the component parts of a welder.

In order to be able to carry out the successive processing steps it is required to access again the contents of the bags and/or the tubes and therefore, usually, the welding components which compress the tube are configured to form, during the melting and subsequent cooling of the tube, tooth-like incisions which extend from one side to the other. At the end of sealing, therefore, the weld performed has a system for facilitating separation of the two sealed flaps which may thus be separated simply by exerting a force which moves them away from each other.

The force required to separate the two flaps must not be too high so as to allow simple execution by the operator, but, at the same time, it must also not be too low in order to prevent the flaps from coming apart on their own and therefore compromising the tracing and/or identification of the sample.

The separation force is determined by the type of material from which the tube is made, the form of the weld, the depth and form of the incision for facilitating separation, the length and the thickness of the residual material at the end of welding, as well as the residual execution temperature.

Furthermore, the weld performed must ensure sealing of the fluid which must not escape following a pulling force exerted in order to separate the flaps and furthermore must ensure proper pressure tightness of the fluid contained inside it so that it does not leak even during centrifugation steps required for the subsequent separation of the blood components. This a crucial aspect of fundamental importance.

There exist numerous devices which perform these operations. Most of the devices of the known type are operated manually and the operator is required to apply force in order to perform compression of the connection tubes. In these cases, the efficiency of the weld and the compliance with the aforementioned requirements depend entirely on the operator and his/her skill, with the obvious risk of incorrect welding due, for example, to the inexperience and/or distraction and/or tiredness of the operator.

In other cases, the entire operation is performed by a motorized actuator which performs the compression operation preceding the material melting step. In these case, since the initial thickness of the compressed walls and the final thickness of the melted walls is different, during execution of the operation mechanical adaptation of the compression system is required. Some devices of the known type, including a device made by the same Applicant, perform this adaptation by means of resilient elements, for example metal springs, which are compressed during the initial step and release again part of the accumulated force during yielding of the material placed between the electrodes.

One of the main drawbacks of these devices of the known type is associated with the specific technical characteristics of the spring (or springs) used, each of which has its own force curve, depending on the compression determined by predetermined constructional design parameters.

These parameters may obviously be optimized, but only for a predetermined absorption force and therefore for a limited type of tube. For tubes which do not fall within this category a suitable behaviour of the welding system and compliance with the aforementioned requirements cannot be guaranteed.

It may be easily shown that the end result may vary significantly depending on the subjective action taken by the operator in the case of the manually operated devices and even more so on the calibration force of the spring (or springs) installed in the device.

In addition to the above, it must be pointed out that, as mentioned initially, each collection kit is composed of different components and they are each connected together by means of one or more connection tubes which may have, depending on the characteristics of the kit, different dimensions such as the internal diameter and external diameter of the tube, and different material, resulting in the need for different treatment of the said material, such as a different temperature at which the operation is performed.

One of the solutions more frequently adopted to overcome the aforementioned drawbacks and provide secure welds is to use different welders for different types of tube (EVA, PVC tubes).

However, the constant development of blood or plasma collection and processing kits and the variety of processes associated with them has generated a multitude of different types of connection tubes, in particular each with different dimensional characteristics, and therefore has resulted in a great variability of the characteristic parameters, such that the use of a plurality of welders for each single requirement is not a feasible solution from a practical and cost point of view.

There has therefore arisen the need to develop a technology which is able to ensure secure welds with tightness and tear strength characteristics suitable for each of the numerous types of connection tubes present on the market.

One object of the present invention is therefore to satisfy this need by providing a welding device for tubes which is fast, performance-repeatable, safe and precise for a wide range of connection tubes of medical containers containing blood components.

The welding performed on any type of connection tube limits the use of different tools and may be performed in a precise as possible manner without the need for action by an operator.

A further object of the present invention is to provide a device able to adapt rapidly to new types of blood bag connection tubes without the need to modify any of its components.

These objects are achieved by a welding device for blood bag connection tubes which comprises a pair of electrodes defining between them a space for housing a blood bag connection tube and designed to perform welding of a blood bag connection tube, an electric power supply source, a radiofrequency energy generation module connected to the electric power supply source and to a first electrode of said pair of electrodes, and an actuator, characterized in that it also comprises a sliding shaft connected to said first electrode and a driving arm having a first end connected to the actuator, and a sensor assembly which connects the sliding shaft to the driving arm and which is able to measure a pressing force exerted by said first electrode on a blood bag connection tube arranged between said pair of electrodes.

The dependent claims define preferred and/or particularly advantageous aspects of the invention.

Further characteristic features and advantages of the present invention will become clear from the following description, provided solely by way of example with reference to the attached drawings.
- Figure 1 is a schematic axonometric view of a welding device for blood bag connection tubes according to the present invention;
- Figure 2 is a block diagram of the structure of a first embodiment of welding device for blood bag connection tubes according to the present invention;
- Figure 3 is a schematic cross-sectional view of a structure for supporting and containing an electrode according to the present invention;
- Figure 4 is an enlarged partial view of an element for adjusting the preload value according to one of the embodiments of the present invention;
- Figure 5 is a block diagram of the structure of a second embodiment of a a device for welding blood bag connection tubes according to the present invention;
- Figure 6 is an enlarged partial view of an element for adjusting the preload value according to another of the embodiments of the present invention;

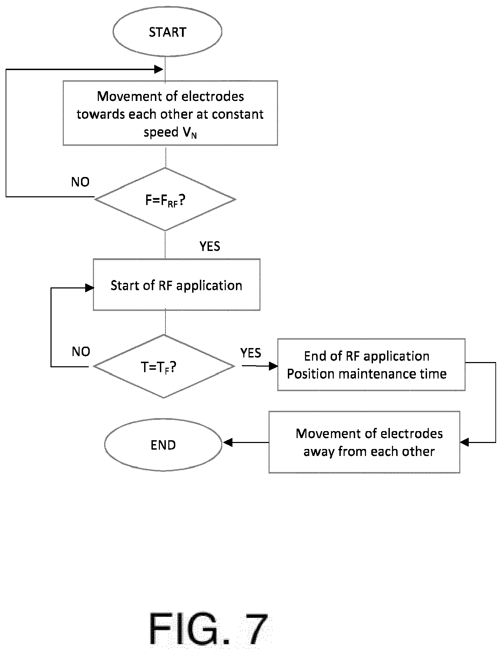

- Figure 7 is a flow diagram of a first mode of implementation of a method for operation of a welding device for blood bag connection tubes according to the present invention; and

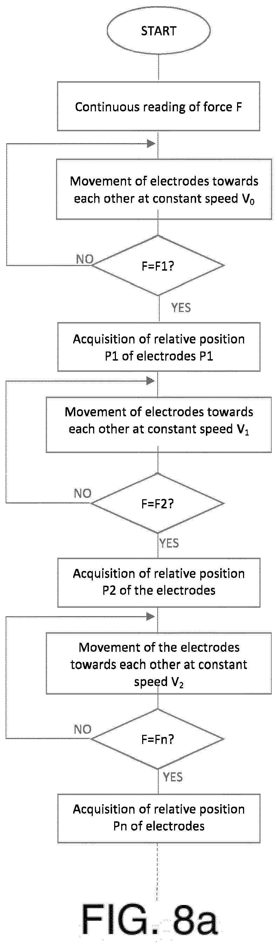

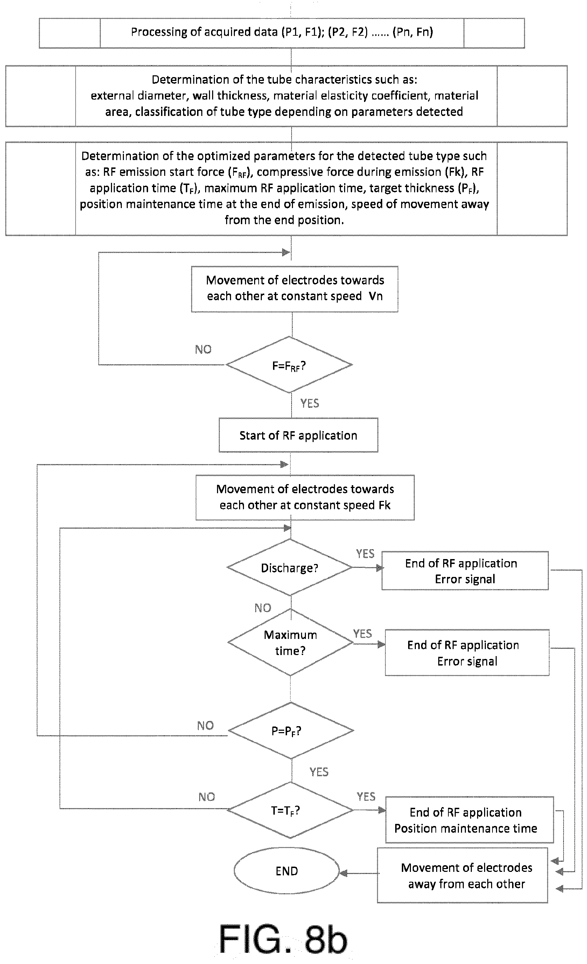

- Figures 8a and 8b are flow diagrams of a second mode of implementation of a method for operation of a welding device for blood bag connection tubes according to the present invention.

In order to facilitate understanding, identical reference numbers have been used, where possible, to identify identical common elements in the figures. It is understood that elements or characteristics of one embodiment may be conveniently incorporated in other embodiments without further clarifications.

A welding device for blood bag connection tubes according to the present invention, which is generally denoted by 1, comprises a welding head 4, namely a pair of electrodes 10, 12 which are designed to perform the welding of a connection tube, an electric power supply 20, a radiofrequency (RF) energy generation module 50, and an actuator 70 connected to at least one of the two electrodes 10, 12.

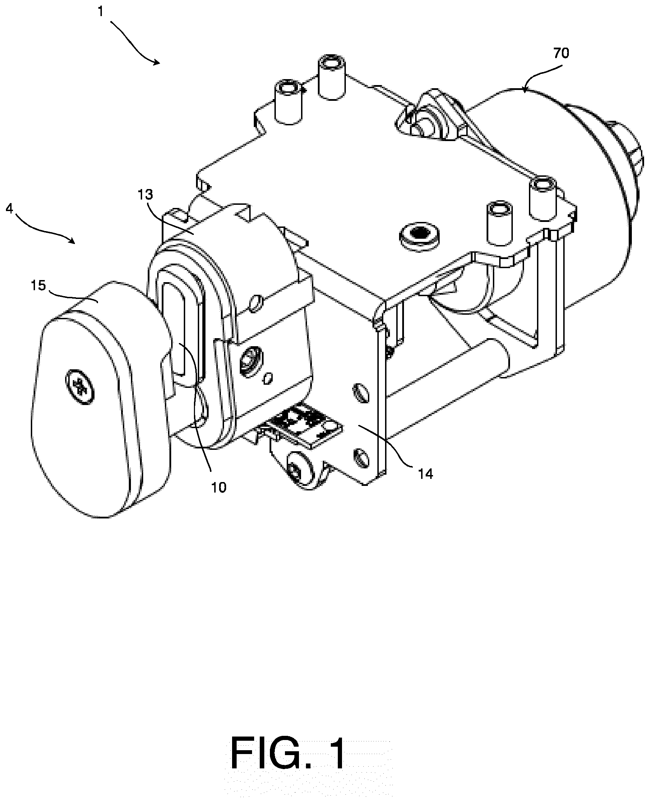

With reference to Figure 1, a welding head 4 according to the present invention comprises a pair of electrodes 10, 12 defining between them a space for housing a blood bag connection tube 2. One of the two electrodes, called a hot electrode 10, is connected to the output of the radiofrequency energy generation module 50, and the other of the two electrodes, called cold electrode 12, is connected to the RF signal return, the frame and the earth of the said welding device.

According to the embodiment shown in the figures, the hot electrode 10 is fixed in an insulated manner to a frame 14 of the welding device 1, while the cold electrode 12 is connected to the actuator 70 which allows, during use, the movement thereof along a longitudinal direction, as will emerge more clearly below. According to this configuration, the welding head 4 may assume a first operating position, or rest position, in which the cold electrode 12 is arranged spaced from the hot electrode 10 and a connection tube of a blood bag may be inserted inside the housing space of the welding head 4, and a plurality of operating positions, or compression positions, in which the cold electrode 12 is moved towards the hot electrode 10 and the tube is compressed between the two electrodes 10, 12.

Preferably, but not exclusively, each electrode 10, 12 is engaged or contained inside a supporting and containing structure 13, 15. For example, the cold electrode 12 is engaged with a splash guard structure 15 which is designed, during use, to prevent, in the event of accidental breakage of the connection tube 2, the fluid contained inside it from leaking and spurting out of the welding head 4.

According to a particularly advantageous characteristic feature, the splash guard structure 15 also comprises an upper internal projection 17, provided with an inclined wall, which is particularly suitable, during use, for guiding the tube inside the housing space of the welding head 4 during a first step, and, during a second step, preventing the contents of the connection tube 2 being able to strike the operator in the form of spray.

According to one of the embodiments of the present invention, one of the two electrodes, in the attached figures the cold electrode 12, comprises teeth which are suitably shaped to form incisions in a blood bag connection tube 2 during execution of the weld.

According to one of the possible embodiments of the present invention, the structure 13 supporting and containing the cold electrode 12 comprises at least one movable element 7 arranged facing the hot electrode 10 and engaged with a resilient element, a spring 9, which is fixed to the supporting and containing structure 13. The movable element 7 is designed, during use, to exert a further pressure on the blood bag connection tube 2 when the welding head 4 is performing a compression step and to prevent a tube inserted in the welding head 4 from being able to come out before the welding process has been completed owing to an unexpected movement or prevent any external pulling force exerted on the connection tube 2 from causing tearing of the said tube 2.

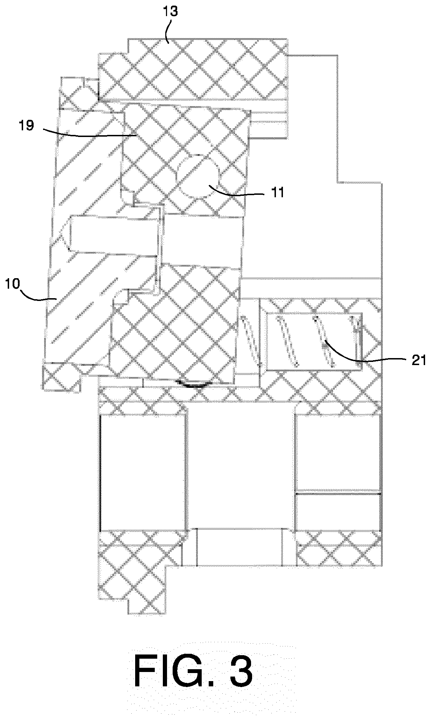

According to the embodiment shown in Figure 3, the supporting and containing structure 13 defines a housing space inside it. The hot electrode 10 is engaged with an electrode assembly 19 in turn connected to the supporting and containing structure 13. The supporting and containing structure 13 comprises a resilient element 21, for example a spring. The electrode assembly 19 is pivotably engaged with the supporting and containing structure 13 by means of a pin 11 and in such a way that its rear wall bears against the spring 21. For example, but not exclusively, in the embodiment shown the spring 21 is inserted inside a recess formed in the rear wall of the supporting and containing structure 13.

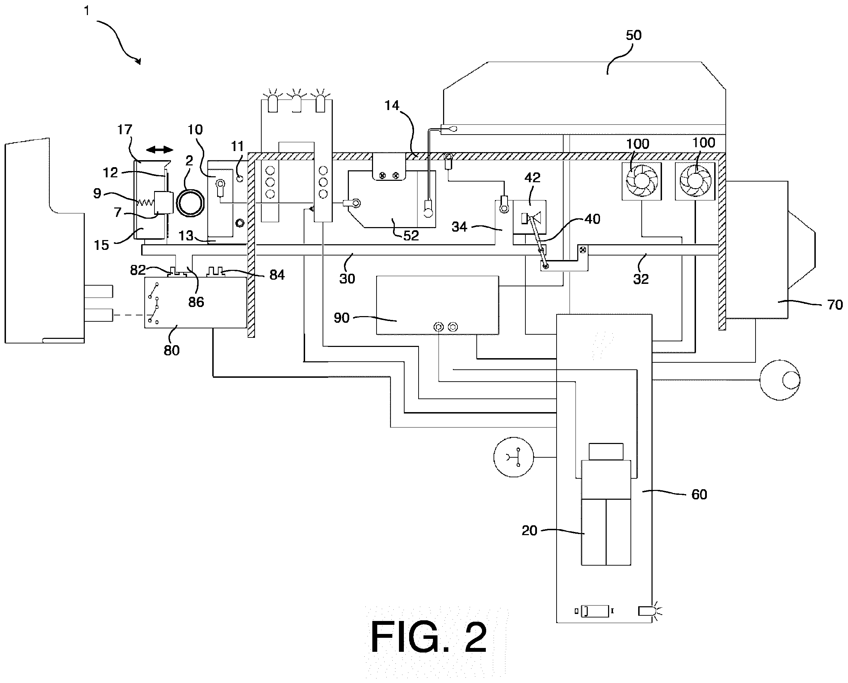

Owing to this configuration, it is possible, during use, to modify and adjust the inclination of the outer surface of the hot electrode 10 with respect to a vertical plane. Still with reference to Figure 2, the hot electrode 10 is connected to the RF generation module 50 by means of connecting cables of the known type, which are preferably insulated. According to the embodiment shown, at least one passive component, for example a high-voltage inducer 52, is arranged between the hot electrode 10 and the RF generation module 50 and is designed to raise the voltage of the RF signal generated by the RF energy generation module 50 to a predetermined value such that the intensity of the electric field generated between the electrodes 13 is sufficiently high to cause melting of the tube and therefore welding thereof.

The welding device 1 further comprises a controller 60, for example an electronic control board comprising at least one memory, a microcontroller system, and a data communication system. The electronic board 60 is connected to the RF generation module 50 and to the actuator 70 and is powered by the electric power supply source 20, which is for example, but not exclusively, an accumulator.

As indicated above, the welding device 1 comprises an actuator 70, for example a linear actuator, connected to at least one of the two electrodes, and in particular to the cold electrode 12. The actuator 70 is designed to move, during use, the cold electrode 12 along a longitudinal direction and in both senses. Consequently, the actuator 70 is designed to move the cold electrode 12 with respect to the hot electrode 10 fixed to the frame 14, even more particularly, the actuator is designed to move the cold electrode 12 towards and away from the hot electrode 10 in order to press or release a blood bag connection tube 2 arranged inside the welding head 4. In the embodiment shown in Figure 2, the cold electrode 2 is connected to a first end of a sliding shaft 30, and the actuator 70 is connected to a driving arm 32.

The welding device 1 also comprises a sensor assembly which connects together the sliding shaft 30 and the driving arm 32 and is designed to measure the pressing force exerted by the cold electrode 12 on a blood bag connection tube 2 arranged inside the welding head 4.

According to this embodiment, the sensor assembly comprises a sensor 42, for example a force sensor, or transducer, engaged with the sliding shaft 30, for example but not exclusively, with a locating lug 34 formed on the second end of the sliding shaft 30.

The sensor assembly also comprises a leverage system, for example a lever 40, a first end of which is arranged opposite a sensitive element of the sensor 42 and a second end of which is engaged with a second end of the driving arm 32. The lever 40 is also pivotably engaged on a second end of the sliding shaft 30.

Owing to the leverage system, the relative displacement of the sliding shaft 30 and the driving arm 32 causes a displacement of the first end of the lever 20 towards or away from the sensitive element of the sensor 42, and therefore the sensor 42 is able to measure the force value exerted by the first end of the lever 40 on the sensitive element. As will become clearer below, the force exerted by the first end of the lever 40 on the sensitive element is proportional to the force exerted on a blood bag connection tube 2 by the cold electrode 12 connected to the sliding shaft 30. According to embodiments of the present invention, the welding device 1 comprises a position sensor 80, which is connected to the controller 60, in order to determine a fully open position and a "nearly closed" position of the welding head 4. In particular, the position sensor 80 is engaged, for example but not exclusively, with the outside of the frame 14, below the welding head 4, and comprises a pair of sensors 82, 84 which are designed to detect the presence of a locating lug 86 formed on the bottom portion of the sliding shaft 30. Even more particularly, when the sensor 82 detects the presence of the locating lug 86, the position sensor 80 sends a signal to the controller 60 which is able to determine that the welding head is in a fully open position, whereas, when the sensor 84 detects the presence of the locating lug 86, the controller 60 is able to determine that the welding head is in the "nearly closed" position.

The welding device 1 also comprises a cooling system which is particularly suitable for decreasing the value of the temperature inside the device. The cooling system comprises at least one air inlet, at least one or more fans, or extractors, 100 and at least one air outlet.

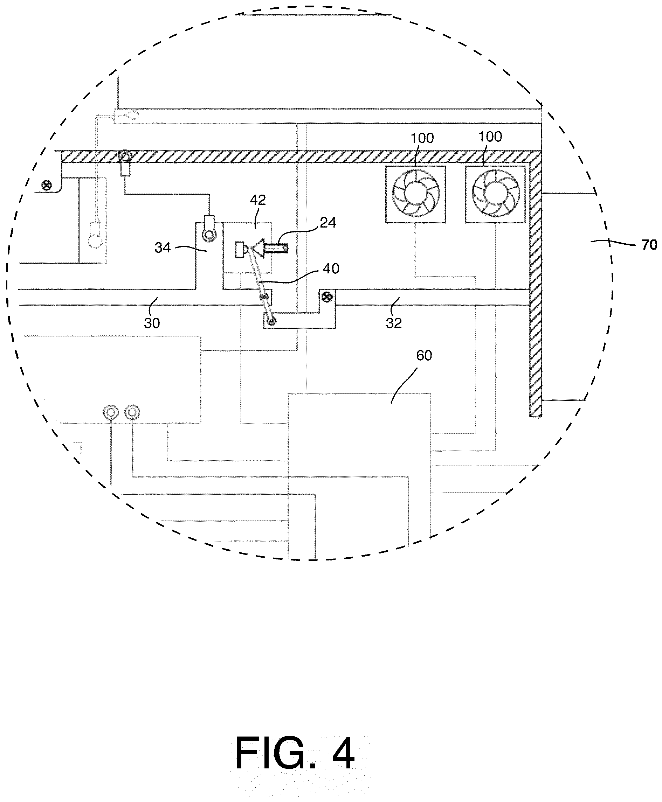

According to an alternative embodiment of the present invention, shown in detail in Figure 4, the sensor assembly may comprise an element 24 for adjusting the preload value, which may also help reduce the mechanical play along the longitudinal axis in relation to the movement of the sliding shaft 30 and the driving arm 32. For example, the adjustment element may comprise a set screw 24 movably engaged with the sensor 42 and able to modify the position of the first end of the lever 40 with respect to the sensitive element of the sensor 42.

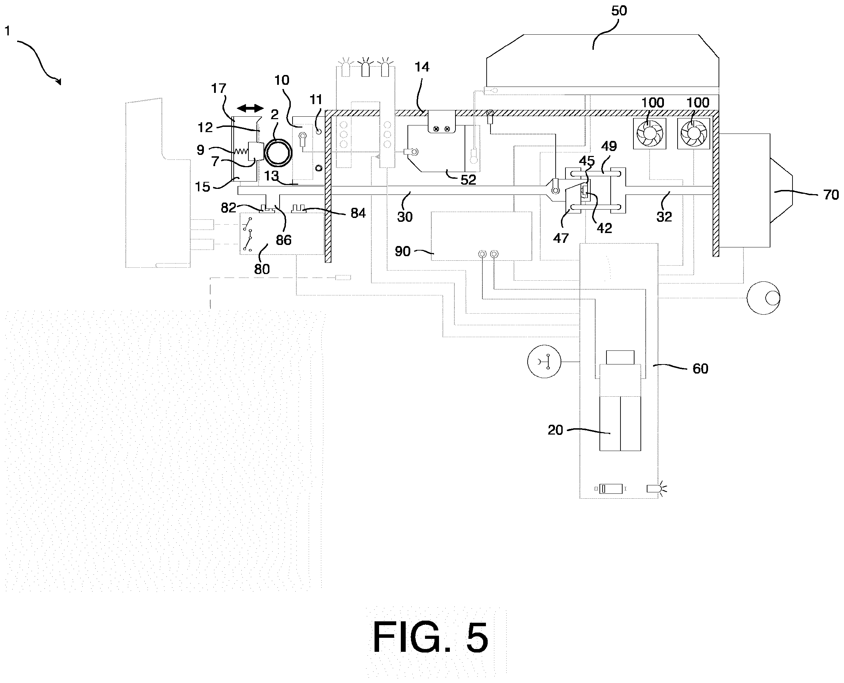

According to a further embodiment of the present invention, shown in Figure 5, a welding device for blood bag connection tubes according to the present invention, which is generally denoted by 1, comprises a welding head 4, namely a pair of electrodes 10, 12 which are designed to perform welding of a connection tube, an electric power supply source 20, a radiofrequency (RF) energy generation module 50 and an actuator 70 connected to at least one of the two electrodes 10, 12.

The hot electrode 10 is fixed in an insulated manner to a frame 14 of the welding device 1, while the cold electrode 12 is connected to the actuator 70 which allows, during use, the movement thereof along a longitudinal direction, as will emerge more clearly below. According to this configuration, the welding head 4 may assume a first operating position, or rest position, in which the cold electrode 12 is arranged spaced from the hot electrode 10 and a connection tube of a blood bag may be inserted inside the housing space of the welding head 4, and a plurality of operating positions, or compression positions, in which the cold electrode 12 is moved towards the hot electrode 10 and the tube is compressed between the two electrodes 10, 12.

The hot electrode 10 is connected to the RF generation module 50 by means of connection cables of the known type, which are preferably insulated. According to the embodiment shown, at least one passive component, for example a high-voltage inducer 52, is arranged between the hot electrode 10 and the RF generation module 50 and is designed to raise the voltage of the RF signal generated by the RF energy generation module 50 to a predetermined value such that the intensity of the electric field generated between the electrodes 10, 12 is sufficiently high to cause melting of the tube and therefore welding thereof.

The welding device 1 further comprises a controller 60, for example an electronic control board comprising at least one memory, a microcontroller system, and a data communication system. The electronic board 60 is connected to the RF generation module 50 and is powered by the electric power supply source 20, which is for example, but not exclusively, an accumulator.

Further technical characteristics relating to the electrodes 10, 12 and the supporting and containing structures 13, 15, described above for the first embodiment are incorporated herein for reference purposes.

As indicated above, the welding device 1 comprises an actuator 70, for example a linear actuator, connected to at least one of the two electrodes, and in particular to the cold electrode 12. The actuator 70 is designed to move, during use, the cold electrode 12 along a longitudinal direction and in both senses. Consequently, the actuator 70 is designed to move the cold electrode 12 with respect to the hot electrode 10 fixed to the frame 14, even more particularly, the actuator is designed to move the cold electrode 12 towards and away from the hot electrode 10 so as to press or release a blood bag connection tube 2 arranged inside the welding head 4. In the embodiment shown in Figure 2, the cold electrode 12 is connected to a first end of a sliding shaft 30, and the actuator 70 is connected to a driving arm 32.

The welding device 1 also comprises a sensor assembly connected to both the sliding shaft 30 and the driving arm 32 and designed to measure the pressing force exerted by the cold electrode 12 on a blood bag connection tube 2 arranged inside the welding head 4.

According to this embodiment, the sensor assembly comprises a sensor 42, for example a force sensor, or transducer, engaged with the sliding shaft 30, for example but not exclusively, inside an opening 45 formed in a second end of the sliding shaft 30. The sensor assembly also comprises a presser or preload disc 47 inserted inside the opening 45 and arranged facing a sensitive element of the sensor 42. The presser disc 47 is connected by means of a pair of arms 49 to the sliding shaft 32. Owing to this configuration, the relative displacement of the sliding shaft 30 and the driving arm 32 causes a displacement of the first presser disc 47 towards or away from the sensitive element of the sensor 42 and therefore the sensor 42 is able to measure the force value exerted by the presser disc 47 on the sensitive element. As will emerge more clearly below, the force exerted by the presser disc 47 on the sensitive element is proportional to the force exerted on a blood bag connection tube 2 by the cold electrode 12 connected to the sliding shaft 30.

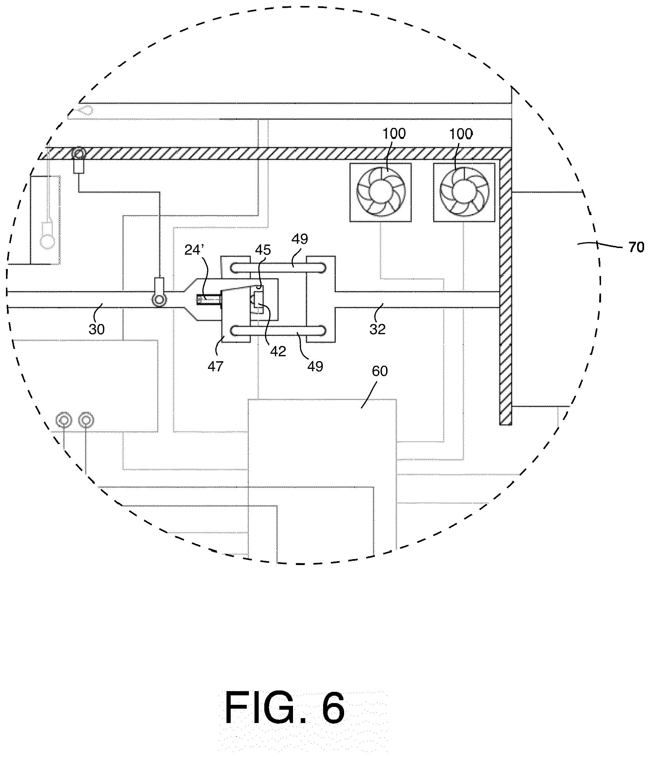

According to an alternative embodiment of the present invention, shown in detail in Figure 6, the sensor assembly may comprise an element 24' for adjusting the preload value, which may also help reduce the mechanical play along the longitudinal axis in relation to the movement of the sliding shaft 30 and the driving arm 32. For example, the adjustment element may comprise a set screw 24' movably engaged with the sensor 42 and able to modify the position of the presser disc 47 with respect to the sensitive element of the sensor 42.

During use, a first mode of implementation of a method for welding blood bag connection tubes, which uses the welding device 1 as described above, comprises a first step during which a blood bag connection tube 2 is placed inside a housing space of the welding head 4 situated between the hot electrode 10 and the cold electrode 12.

Subsequently the method comprises a step in which the controller 60 activates the actuator 70 so as to move longitudinally the driving arm 32, and therefore the sliding shaft 30, along a first direction of movement able to move the cold electrode 12 towards the hot electrode 10. The actuator 70 moves the driving arm at a constant speed V_{N}. During this step, since the cold electrode 12 does not encounter any obstacles, or does not yet bear against the blood bag connection tube 2, the driving arm 32 and the sliding shaft 30 move integrally without the lever 40 changing its position.

When the cold electrode 12 comes into contact with the blood bag connection tube 2, the resistance offered by the tube 2 is such that the speed of displacement of the sliding shaft 30 decreases with respect to that of the driving arm 32 which is actuated by the actuator 70 always at the same predetermined constant speed V_{N}. In this condition, the lever 40, the fulcrum of which is arranged on the sliding shaft 30, is displaced by the driving arm 32 so that the second end of the lever 40 presses against the sensitive element of the sensor 42. During this step, the controller 60 by means of the sensor 42 measures the force F exerted by the lever and corresponding to a proportional resistive force exerted by the tube.

Then, when the force sensor 42 detects that a predetermined force F_{RF} has been reached, namely when F = F_{RF}, the method comprises a step where the controller activates the RF module 50 for a predetermined time interval T_{F} so as to allow welding of the blood bag connection tube 2.

At the end of the time interval T_{F}, the controller deactivates the RF module 50 and activates the actuator 70 so as to reverse the direction of movement of the sliding shaft 30, moving the cold electrode 12 away from the hot electrode 10 and bringing the welding head 4 back into the rest position. At this point the blood bag connection tube 2 may be extracted from the housing space of the welding head 4 situated between the hot electrode 10 and the cold electrode 12.

According to a further mode of implementation of the present invention, a method for welding blood bag connection tubes, which uses the welding device 1 as described above, comprises a first step in which the controller 60, by means of the force sensor 42, measures a force F exerted by the second end of the lever 40 which presses against the sensitive element of the sensor 42. With this measurement it is possible to define a predetermined reference force value, which is regarded as an initial value or "base value" during the subsequent steps of the method.

The method comprises a second step in which the controller 60 activates the actuator 70 so as to move longitudinally the driving arm 32, and therefore the sliding shaft 30, along a first direction of movement able to move the cold electrode 12 towards the hot electrode 10. The actuator 70 moves the driving arm 32, and therefore the cold electrode 12, at a first constant approach speed V₀.

The method comprises a third step, in which the controller 60 checks whether the force sensor 42 has detected a predetermined force F₁, namely where F=F₁.

The method then comprises a fourth step in which, if the value of the force F measured by the sensor corresponds to the value of the predetermined force F₁, the controller 60 detects from the actuator 70 a predetermined actuation parameter and determines the longitudinal movement distance travelled by the driving arm 32, and therefore the sliding shaft 30, from activation of the actuator 70 in the second step described above.

On the basis of the distance value determined, the controller 60 is able to determine, or deduce, a first relative position P₁ of the hot and cold electrodes 10, 12. For example, but not exclusively, in the case where the actuator 70 is a stepper motor, the controller 60 detects the number of steps performed by the motor in order to determine the longitudinal movement distance travelled by the driving arm 32 and therefore the sliding shaft 30.

In the meantime, the actuator continues to move longitudinally the driving arm 32, and therefore the sliding shaft 30, along said first direction of movement.

The method comprises a fifth step, in which the controller 60 checks whether the force sensor 42 has detected a predetermined force F₂, namely where F=F₂.

The method then comprises a sixth step in which, if the value of the force F measured by the sensor corresponds to the value of the predetermined force F₂, the controller 60 detects from the actuator 70 a predetermined actuation parameter and determines the longitudinal movement distance travelled by the driving arm 32, and therefore the sliding shaft 30, from the moment where F is equal F1 in the fourth step described above. On the basis of the distance value determined, the controller 60 is able to determine, or deduce, a relative position P₂ of the hot and cold electrodes 10, 12.

In other words, during the longitudinal movement of the driving arm, the leverage system 23 which engages the sensitive element of the force sensor 42 is able to detect an opposing force present between the electrodes 12 and 10. The controller 60, which supervises the reading of the force sensor 42, comprises a microcontroller system which, by means of a coded algorithm, is able to read the progression of the force value and also determine when given values are exceeded. These readings may be correlated by the algorithm for managing the movement and the sensor system with a physical position in space, such as, for example, the number of steps read by an encoder or the steps performed by the linear actuator 70. By correlating one or more spatial positions with the force value read, and vice versa, it is possible to estimate with a sufficient degree of precision some of the characteristics of the blood bag connection tubes 2, such as the external diameter, the thickness of the walls, or the elasticity characteristics of the material in the temperature conditions to which it is exposed.

Steps 3 to 6 described above may be repeated n times, while the actuator continues to move the driving arm 32, and therefore the sliding shaft 30, longitudinally along said first direction of movement, so as to acquire n relative positions of the electrodes. Determination of the number of times these steps are to be repeated depends on the number and the type of parameters which are to be detected on the blood bag connection tubes 2 and/or the type of said tube.

By means of the repetition of these n steps it is possible to determine a profile for the progression of the force applied to a type of blood bag connection tube 2 in a welding process.

For example, but not exclusively, by means of this succession and repetition of steps it is possible to determine the external diameter of the tube, the thickness of the tube walls, the elastic coefficient of the material from which the tube is made, the circular cross-section of the tube, etc.

According to a further mode of implementation of the method according to the present invention, during steps 3 to 6 described above, each time the controller 60 establishes that the force sensor 42 detects that a predetermined force Fₙ has been reached, namely where F=Fₙ, the controller 60 activates the actuator 70 so as to modify the constant approach speed Vₙ to a second constant approach speed Vₙ₊₁. By means of all or some of these parameters it is possible to determine and classify the type of blood bag connection tube 2 and, in particular, it is possible to calculate predetermined parameters for operation of the welding device 1 during the subsequent welding steps which, obviously, are optimized depending on the type of blood bag connection tube 2 inserted inside the welding head 4.

Furthermore, these parameters are able to determine dynamically the type of blood bag connection tube 2 which is approached. As a result it is possible to define also the possible optimized welding characteristics, such as the radiofrequency application time, the compressive force for starting RF emission, the final distance between the electrodes, and, last but not least, the cooling time interval for the blood bag connection tube 2 which must be allowed for before the electrodes 10, 12 are opened again and the weld can be considered to have been completed.

For example, but not exclusively, it is possible to calculate a force value for the start of radiofrequency emission F_{RF}, a compressive force value during emission of the radiofrequency Fk, a time interval for application of the radiofrequency T_{F}, a maximum time interval for application of RF, a thickness value of the blood bag connection tube 2 (P_{F}), a time interval FR during which the electrodes 10, 12 are kept in position at the end of emission, a value of the speed of movement of the electrodes away from the operating position towards the rest position, etc. Thereafter, once the relative position n of the electrodes 10, 12 has been acquired and the values of the operating parameters of the welding device 1 have been calculated, the method according to the present invention comprises a seventh step in which the controller checks whether the force sensor 42 has detected the presence of a predetermined force F_{RF}, namely where F=F_{RF}.

The method comprises then an eighth step in which, if the value of the force F measured by the sensor corresponds to the value of the predetermined force F_{RF}, the controller 60 activates the RF module 50 for a predetermined time interval T_{F} so as to allow welding of the blood bag connection tube 2.

The method then comprises a ninth step in which, depending on the force values detected by the force sensor 42 and the distance values determined, the controller determines a thickness value P of the blood bag connection tube 2 inserted inside the welding head 4. If the thickness value P determined is not equal to a predetermined thickness value P_{F}, the controller 60 continues to keep the actuator 70 active.

In other words, the use of the force sensor 42 also allows definition of the exact moment in which the blood bag connection tube 2 is sufficiently compressed so as to perform more efficiently the initial emission of radiofrequency applied to the electrodes, as well as the moment in which the radiofrequency may be best engaged and therefore the welding time shortened.

According to a further advantageous characteristic feature of the present invention, from the moment in which application of the radiofrequency starts, the molecular movement induced in the material causes softening and consequently a reduction in the counter-reaction force value between the electrodes 10 and 12. This reduction in the force on the sensor 42 is determined by the controller 60 which activates the actuator 70, moving the cold electrode 12 towards the hot electrode 10 by means of the mechanism comprising the mechanical parts fastened to it, namely the driving arm 32, the leverage system 40 and the sliding shaft 30, until the force sensor 42 measures again the previous force value. In other words, the controller 60, which up to this point adjusted the movement of the cold electrode 12 by means of the actuator 70 so that the approach speed V was constant, starts to adjust the movement of the cold electrode 12 by means of the actuator 70 so that the force F detected by the sensor 42 is constant, namely F=Fₖ.

Therefore, after activation of the RF module 50 and during the predetermined time interval T_{F}, the controller 60 determines the force value detected by the sensor 42. Whenever the force value detected by the sensor 42 is different from a predetermined force value Fₖ, the controller 60, by means of the actuator 70, modifies the approach speed V, increasing it or decreasing it until the force value detected by the sensor 42 is equal to the predetermined force value Fₖ.

The method comprises then a tenth step where, if the controller 70 determines that P=P_{F} and T=T_{F}, the controller 70 deactivates the RF module 50 and activates the actuator 70 so as to reverse the direction of movement of the sliding shaft 30, moving the cold electrode 12 away from the hot electrode 10 and bringing the welding head 4 back into the rest position. At this point the blood bag connection tube 2 may be extracted from the housing space of the welding head 4 situated between the hot electrode 10 and the cold electrode 12.

By means of identification of the characteristics of the blood bag connection tube 2 during welding and automatic adaptation of the parameters involved in the process, achieved with the present invention, it is possible to concentrate in a single device optimized performance features for a broader range of operations.

According to embodiments of the present invention, all the predetermined force values F₁, F₂, ...Fₙ, F_{RF} etc., speed values V₀, V₁, ...Vₙ etc., and time values T_{F}, T_{RF} etc. may be calculated beforehand by means of tests carried out on different types of blood bag connection tubes 2 or by means of mathematical calculations based on parameters of said types of tube 2, such as, for example but not exclusively, tube thickness, tube diameter, material from which the tube is made, tube temperature, etc.

Owing to this solution it is possible to adapt rapidly the welding device to any type of blood bag connection tube 2 regardless of the characteristics of the said tube and external factors such as the temperature, without replacing or modifying the welding device.

## Claims

1. A welding device (1) for blood bag connection tubes comprises a pair of electrodes (10, 12) defining between them a space for housing a blood bag connection tube (2) and designed to perform welding of a blood bag connection tube (2), an electric power supply source (20), a radiofrequency energy generation module (50) connected to the electric power supply source (20) and to a first electrode (12) of said pair of electrodes, and an actuator (70),
**characterized in that** the device further comprises a sliding shaft (30) connected to said first electrode (12) and a driving arm (32) having a first end connected to the actuator (70), and a sensor assembly which connects the sliding shaft (30) to the driving arm (32) and which is able to measure a pressing force exerted by said first electrode (12) on a blood bag connection tube (2) arranged between said pair of electrodes (10, 12).

2. Welding device according to Claim 1, **characterized in that** the sensor assembly comprises a force sensor (42) engaged with the sliding shaft (30) and a leverage system (40) engaged with the driving arm (32) and pivotably engaged with the sliding shaft (30).

3. Welding device according to Claim 2, **characterized in that** the leverage system comprises a lever (40), a first end of which is arranged opposite a sensitive element of the sensor (42) and a second end of which is engaged with a second end of the driving arm (32).

4. Welding device according to Claim 1, **characterized in that** the sensor assembly comprises a force sensor (42) engaged with the sliding shaft (30) and a presser disc (47) arranged facing a sensitive element of the sensor (42) and connected to the driving arm (32).

5. Welding device according to Claim 4, **characterized in that** the force sensor (42) and the presser disc (47) are inserted inside an opening (45) formed in a second end of the sliding shaft (30), and the presser disc (47) is connected by means of a pair of arms (49) to a second end of the driving arm (32).

6. Welding device according to any one of the preceding claims, **characterized in that** it comprises a supporting and containing structure (13) inside which a resilient element (21) is arranged and comprises an electrode assembly (19) with which a second electrode (12) of said pair of electrodes is engaged, the electrode assembly (19) being pivotably engaged with the supporting and containing structure (13) by means of a pin (11) and so that its rear wall is makes contact with the spring (21).

7. A method for welding blood bag connection tubes comprises the following steps:
- providing a welding device comprising a pair of electrodes (10, 12) which are designed to perform a weld on a connection tube, an electric power supply source (20), a radiofrequency energy generation module (50), a controller (60), an actuator (70) connected to a first electrode (12) of said pair of electrodes (10, 12) by means of a sliding shaft (30), and a sensor assembly (42) designed to measure a pressing force exerted by said first electrode (12) on a blood bag connection tube (2) arranged between said pair of electrodes (10, 12);
- positioning a blood bag connection tube (2) between the pair of electrodes (10, 12); **characterized in that** it also comprises the steps of:
- moving the sliding shaft (30) longitudinally, along a first direction of movement able to move the first electrode (12) of said pair of electrodes towards a second electrode (10) of said pair of electrodes at a constant speed (V_{N});
- activating the radiofrequency energy generation module (50) for a predetermined time interval (T_{F}) when the force sensor (42) detects a predetermined force (F_{RF});
- deactivating the radiofrequency energy generation module (50) at the end of the predetermined time interval (T_{F});
- activating the actuator (70) so as to move the first electrode (12) away from the second electrode (10); and
- moving the blood bag connection tube (2) away from the pair of electrodes (10, 12).

8. Method according to Claim 7, **characterized in that** it also comprises the following steps:
- if a force value (F) measured by the sensor (42) corresponds to a first predetermined force value (F₁), detecting by means of the actuator (70) an actuation parameter and determining the longitudinal movement distance travelled by the sliding shaft (30) and then determining a first relative position (P₁) of the pair of electrodes (10, 12);
- continuing to move longitudinally the sliding shaft (30) along said first direction of movement;
- if a force value (F) measured by the sensor (42) corresponds to a second predetermined force value (F₂), detecting by means of the actuator (70) an actuation parameter and determining the longitudinal movement distance travelled by the sliding shaft (30) and then determining a second relative position (P₂) of the pair of electrodes (10, 12).

9. Method according to Claim 8, **characterized in that** it comprises the repetition n times of the steps of Claim 8 in order to determine a profile for the progression of the force applied to a type of blood bag connection tube (2) in a welding process.

10. Method according to Claim 7, **characterized in that**, during the predetermined time interval (T_{F}), it comprises the following steps:
- determining a force value detected by the sensor (42);
- activating the actuator (70) so as to modify the constant speed (V_{N}) if the force value determined is different from a predetermined force value (F_{K}).
